Europäisches Patentamt

(19) European Patent Office

Office européen des brevets

(11) Publication number: **0 311 653 B1**

# (12) EUROPEAN PATENT SPECIFICATION

(45) Date of publication of patent specification :
08.01.92 Bulletin 92/02

(51) Int. Cl.⁵ : **E04B 1/20**

(21) Application number : **88902954.2**

(22) Date of filing : **06.04.88**

(86) International application number :
**PCT/NO88/00023**

(87) International publication number :
**WO 88/08059 20.10.88 Gazette 88/23**

(54) BUILDING CONSTRUCTION.

(30) Priority : **07.04.87 NO 871451**
**17.02.88 NO 880703**

(43) Date of publication of application :
**19.04.89 Bulletin 89/16**

(45) Publication of the grant of the patent :
**08.01.92 Bulletin 92/02**

(84) Designated Contracting States :
**AT BE CH DE FR GB IT LI LU NL SE**

(56) References cited :
**EP-A- 0 008 713**
**DE-A- 2 307 756**
**DE-A- 2 851 796**

(56) References cited :
**GB-A- 1 400 595**
**GB-A- 2 108 548**
**GB-A- 2 179 115**
**US-A- 3 513 610**

(73) Proprietor : **SPENN-GRUPPEN AS**
**P.O. Box 38**
**S-3501 Hoenefoss (NO)**

(72) Inventor : **THORESEN, Bjoern, O.**
**Toppveien 15**
**N-3500 Hoenefoss (NO)**

(74) Representative : **Simpson, Ronald Duncan**
**Innes et al**
**A.A.Thornton & Co. Northumberland House**
**303-306 High Holborn**
**London WCIV 7LE (GB)**

## Description

The present invention relates to the construction of joints for interconnecting concrete beams with columns in building structures.

In building constructions consisting of concrete columns interconnected with concrete beams, the concrete columns are usually provided with lateral projections or brackets or consoles at each floor level for support of the beams. This arrangement facilitates quick erection of building structural frames, and the beams can be given a length equal to the distance between the respective columns.

Lateral projections on the columns are, however, usually not desirable, since they complicate production, storage and transport, and they complicate the installation of cables and lines, and in many cases can result in corner terminations in the building which hinders interior installations. In order to avoid lateral projections the consoles can be made sufficiently short vertically, so that they are incorporated in the vertical dimensions of the beam and floor structure, but such solutions may weaken the load capacity of the structure and complicate the subsequent mounting of floor decks between the beams.

A further disadvantage of conventional console arrangements is that a rigid and self supporting structure may not be obtained. As a remedy various types of joint strengthening means can be used, but they demand special steps such as bolting, welding or moulding, which lead to larger costs and can delay building work with the same result.

A further disadvantage with console columns is that the columns must be produced and delivered with pre-designed consoles in order to fit into the building in question, and in many cases one must remove consoles which are not being used. Need can arise for up to four consoles at each floor level, but in many cases there is need for only one or two consoles. This technique has led to steadily more complicated columns with consoles both in three and four directions at each floor level.

In order to avoid use of columns with prefabricated consoles there have been developed several so called "console free" columns, wherein prefabricated concrete consoles are replaced by embedded fittings usually made of steel and positioned in opposing parts of the columns and beams at each floor level at the junctions or so called "nodes". These complementary fittings in the columns and beams, respectively, are put into engagement with each other during the building erection by means of bolts, welding or in other ways.

As an illustration of the technique reference is made to DE-A-1,914,298. According to this document two pairs of embedded fittings are used at each joint between a beam and a column. The fittings, however, present lateral console-like parts which are easily damaged during transport and otherwise possess several of the shortcomings already described. The positioning and mounting of the beams demand further welding as well as moulding. In another known solution boxlike fittings are embedded in the column during the production of the same. On the building site a console is mounted into the box fitting by means of bolts, whereafter the beams may be positioned in place when the columns have been erected. The beam is thereafter fastened by means of bolts and a moulding operation.

In GB-A-2179115 there is described a joint in which a separate bracket is attached to a plate embedded in the concrete column by means of hook portions engaging in recesses in the plate and bolts. Further bolts are employed to fasten the bracket to a plate embedded in the beam end. Although fixed projecting consoles are avoided this construction still requires bolts which must be fastened.

There is described in GB-A-1400595 a joint between a vertical concrete column and a horizontal beam wherein tubular sockets of square cross-section are embedded in the column and the end of the beam. Telescoped within the beam socket is a tubular metal spigot member with a blanked-off outer end. On assembly of the joint the spigot member is driven by compressed air out from the beam socket so that it enters the column socket and bridges between the two sockets, and hence between the beam and column. The spigot member is fastened by means of locking pins inserted laterally through aligned holes in the beam/column, the socket and the spigot member. The form of the spigot member is inconvenient as it must be fabricated by welding. The assembly of the joint is complicated by the need for a source of compressed air, and difficulty in ensuring correct positioning of the spigot member for insertion of the locking pins. Furthermore, only when the pins have been correctly inserted will the beam be secure against longitudinal disconnection from the column.

The principal aim of the present invention is to provide a new "console free" building construction for providing joints between columns and beams and which makes it possible to provide a quick, safe and time saving erection of a building frame structure with moderate demands upon the technical equipment required on the building site and in particular so that joints can be completed without requiring use of bolts, welding, moulding and similar steps etc:

In accordance with the present invention there is provided a joint for interconnecting a concrete beam (or beams) and a column for a building structure each joint unit comprising:

    a) a support casing or box which is embedded in the end of the beam, said box being open at and flush with the transverse end surface of the beam;

    b) a complementary support casing or box embedded in the column for each beam, said box being open towards the side surface of the column and flush with the same;

c) a separate bridge element positioned in a support box in the column and a support box in a beam, the said bridge element being displaceable longitudinally of the beam during assembly of the joint; and

d) a locking element for fixing the bridge element against longitudinal movement relative to the beam to complete the joint, characterised in that the said bridge element is constructed to make direct engagement with the casing into which it is inserted during assembly of the joint to prevent its withdrawal from that casing by relative movement in the longitudinal direction of the beam and that the casing in each beam is open from above to permit insertion (or subsequent removal) of a wedge which constitutes the said locking element.

In addition to meeting the fundamental aim, a joint according to the invention may ensure a sufficiently rigid joint between a beam and column, such that the frame structure, even prior to mounting the floor decks, presents a self supporting, rigid frame.

In addition, in spite of stiffness in the junctions, the joint of the invention can provide for certain horizontal movements between beams and columns, such that one can avoid otherwise frequently encountered problems associated with temperature variations or crimp in the concrete beams.

The invention is based on the idea of providing the beam and column with embedded, outwardly open load bearing boxes which are terminated flush with the outside of the beam end and column, respectively, and positioning in the opposing pair of boxes in the beam and column, during the erection of the building, a bridge element which forms a support bridge between the beam and the column at their junction. The caissons or boxes and the bridge elements preferably have substantially the same configuration and both sideways and vertically. An important feature of the invention is that the bridge element is provided with wedge means in order to be locked or fixed against undesired horizontal movements relative to the beam.

A joint between a beam and a column in accordance with the invention can be realised in several different fashions.

In the preferred embodiment the bridge element has the form of one single substantially rectangular plate element or element unit with much larger height than width and so dimensioned that the height extends over a substantial part of the vertical dimension of the beam. With a such bridge element, the joint can have large strength and sufficient torsional resistance, especially against vertical loads, and simultaneously the bridge element and thereby the junction can have suitable stiffness in the horizontal plane. Furthermore, this good results with one separate joining element between the beam and column, a fact which simplifies the production and the assembly.

The plate-shaped bridge element can comprise one separate plate element or two substantially identical plate elements which lie against each other.

The support housings or boxes in the column can be made either for unilateral or bilateral support of beams. In the unilateral arrangement a separate plate-shaped bridge element can be used and be positioned in the boxes in the column and the beam, respectively, while in the bilateral arrangement the column can be provided with a through-going box for reception of a two-part, or double bridge element, designed to support a beam on each side of the column. In all the various embodiments for the invention, the bridge elements are fixed to the beams by means of wedge elements. With the bilateral arrangement an additional advantage can be secured that the beams at the junction can undergo a certain horizontal movement both mutually and relative to the column. The bridge elements and the boxes can be provided with recesses and/or locking means such that upon assembly of the joint a locking of the beam to the columns is obtained.

The joint in accordance with the invention results in several important advancements in the art. Thus, neither the beams or the columns need to have any kind of projecting support consoles, fittings or the like. As described, projecting parts on the columns imply complications both in connection with production, storage, transport and assembly. The invention means assembly can be carried out quickly and simply without use of welding, bolts and the like, and without need for special tooling. Upon assembly one obtains immediately a self supporting rigid and, especially in the vertical plane, a torsionally stable construction.

As mentioned, the invention can be realised by several somewhat different embodiments, but a common feature for these is that subsequent to the assembly no exposed metal parts will exist, either on the beams or the columns. A final fixing of the beams relative to the columns can take place by means of wedge elements, a fact which also makes possible a final adjustment of the length of the beams relative to the pre-set distance between the columns. In the embodiment wherein the bridge element consists of two laterally superposed plate-shaped members to provide a bilateral junction, the respective beams can be fixed to the plate members of the bridge element in assembled position such that the beams can undergo limited horizontal movement both mutually and relative to the columns and thereby compensate for dimensional variations due to temperature variation and crimp in the concrete.

Some embodiments of the invention will now be described in more detail with reference to the attached drawings, wherein:

Figures 1 to 6 are views illustrating one embodiment of the invention wherein the bridge element consists of one separate and substantially rectangular plate-shaped element;

Figures 7 to 15 are views illustrating a second, similar embodiments of the invention wherein the bridge element and the support boxes are such configured that one by means of one or several wedge members can obtain a rigid joint in the vertical plane;

Figures 16 to 20 are views illustrating a bridge element for a third embodiment of the invention, where the bridge element consists of two substantially identical plate-shaped elements which are sandwiched together,

Figures 21 to 23 are views illustrating a support provided with a through-going support for reception of a bridge element as shown in Figures 16 to 20;

Figures 24 to 26 are views illustrating the end section of a beam furnished with an embedded support box designed for reception of a bridge element as shown in Figures 16 to 20, and

Figure 27 is a lateral view illustrating a junction between two beams and a column joined together by means of the embodiment for the invention illustrated in Figures 16 to 26.

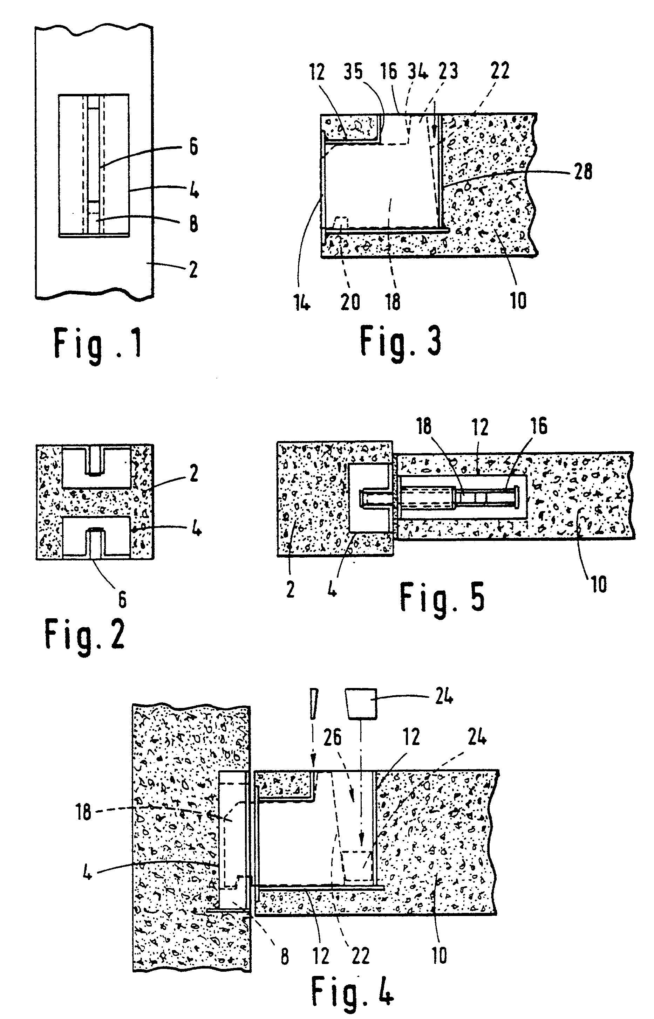

Figures 1 and 2 are views which schematically show a lateral view and a plan view, respectively, through a concrete column 2 provided with an embedded support box 4 consisting of steel plating material and which is presented with an outwardly open, vertical slit 6 which in the bottom is terminated with a support 8 for the beam.

In the complementary beam 10 as shown in Figures 4 to 6 is embedded a complementary support box 12 of steel plate material likewise made with a vertically open slit 14. The support box 12 is on the top side provided with an opening 16, at a distance from the end of the beam. In the support box 12 is positioned a longitudinally displaceable bridge element 18, herein shown in broken lines. The bridge element 18 is on its underside provided with a hook-shaped recess 20, and has at its inner edge a tilted or oblique termination 22 in order to cooperate with a complementary wedge member 24. At its top side, the bridge element has an upwardly directed projecting part 23 which extends into the opening 16. The bridge element 18 can be displaced outwardly and inwardly in the box 12, but is held captive by engagement between the part 23 and transverse locking shoulder 35 at the outer end of the opening 16.

During the erection of the building, the column and the beam are initially positioned as shown in Figure 4, for instance by using cranes, rigs, etc. The bridge element 18 is thereafter manually, or by means of a rod or the like put against the part 23 through the opening 16 in the top of the beam, displaced out of the end surface of the beam and into the support box 4 in the column 2. Thereafter the beam 10 is somewhat lowered so that the recess 20 in the under edge of the bridge element 18 comes to rest on the transverse latch element 8 in the support box 4 so as to be locked against withdrawal from the casing by horizontal movement in the longitudinal direction of the beam. Thereafter a wedge-shaped locking element 24 is forced down into the wedge-shaped gaps 26 between the oblique rear edge 22 on the bridge element and the back wall 28 in the support box 12. Final adjustment of the joint between beam and column is obtained by means of wedge elements which are forced into the opening between the fore edge 34 of the upwardly pointing part 23 on the bridge element and the adjacent shoulder 35 in the support box 12. One may further, if needed, position wedge elements between the front end of the beam and the column. Remaining open spaces can be filled and covered by means of fire inhibiting plastic foam or the like.

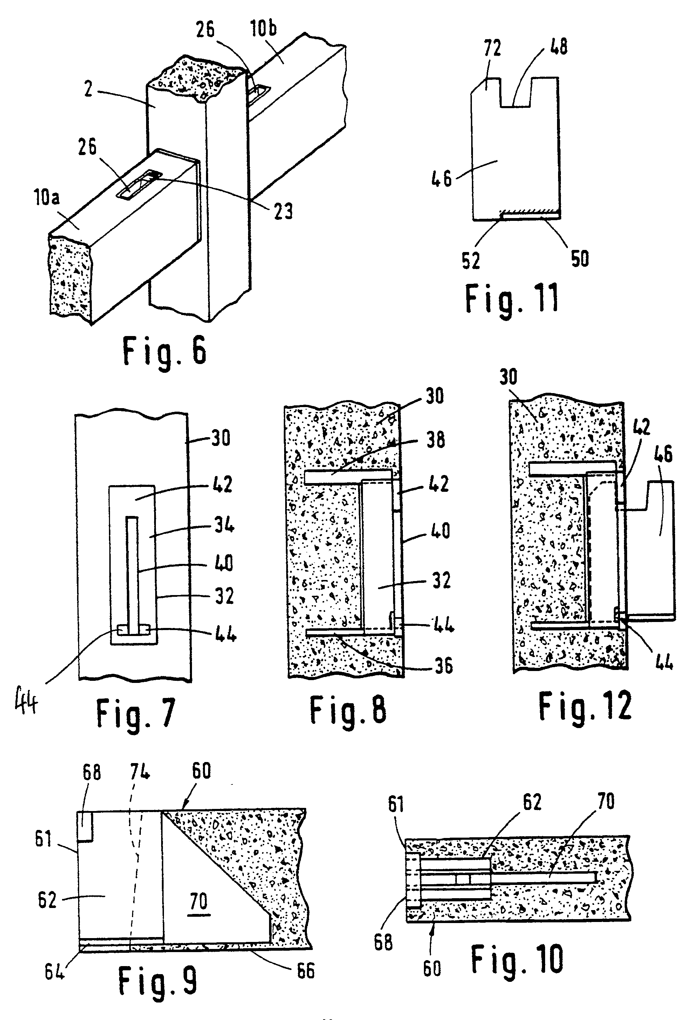

The perspective view shown in Figure 6 illustrates the appearance of the junction between two beams 10a and 10b, and a column 2 as described in Figures 1 to 5. The only visible part of the junction will be the slit 26, 26 and possibly the uppermost part 23 of the bridge element, as shown, but also these parts may be hidden by suitable material and will in any case be covered below the floor deck structure.

Figures 7 to 15 illustrate a second embodiment of the invention.

Figures 7 and 8 show a front view and a lateral view, respectively (partly in section) of a concrete column 30 provided with an embedded support box 32, preferably made of steel plate material and including a strong front wall 34 and embedded reinforcements 36 and 38. In the front wall 34 is provided a vertical opening 40 which is terminated at the top by a front wall portion 42 constituting a latching member. At the bottom, the box is provided with reinforcement elements 44 on the plate 34 either side of the opening. The bridge element 46 is shown in side view in Figure 11. It has in its upper edge a recess 48 behind an upwardly directed hook portion 72. At its lower edge, the element 44 has welded to it a transverse plate 50 which is terminated in forward direction at the point 52.

The configuration of the complementary beam 60 appears from Figures 9 and 10. In the front end of the beam 61 is embedded a support box 62 which at the bottom is provided with a welded transverse plate 64 at a distance from the under side of the beam 66 and which corresponds to the thickness of the bottom plate 50 of the bridge element 46. At its front upper edge the support box is provided with a transverse support member 68. At the inner end the support box 62 is provided with an anchoring piece 70 and a forward wedge surface 74. The joining together of the beam and the columns by means of the bridge element 46 appears best from Figures 12, 13 and 14.

The bridge element 46 is initially held in a somewhat tilted position against the column (not shown) such that the hook portion 72 can be threaded into the box below the latching members 42, whereafter the lower part of the bridge element can be pivoted into correct position in the box in order to be biased against elements 44, such that the bridge element is positioned in the box as shown in Figure 12. Thereafter the beam is located in correct position somewhat higher than the bridge element, and the support box in the beam is threaded on to the bridge element and is thereafter descended down such that the bridge element receives the weight of the beam, whereafter the support member 68 is placed down into the recess 48 in the bridge element, simultaneously as the transverse plate 64 at the bottom of the bridge element rests against the bottom plate 50 on the bridge element 46. In other words, the bridge element will in fixed position be positioned in the box in the column both at the top and at the bottom. Finally, wedge elements 75 and 76 may be forced down between the side edge of the bridge element and the tilted fore edge of the back wall 70, and further between the rear edge of the support element 68 and the fore edge of the recess 48 in the bridge element. Thereby the beam will be rigidly joined with the column such that the beam can sustain moments in the vertical plane relative to the column. Thereby is reduced beam sagging, torque loads about horizontal axes, and the vibration amplitude in the beam is reduced. The total effect of the before mentioned factors is that the beam height can be reduced.

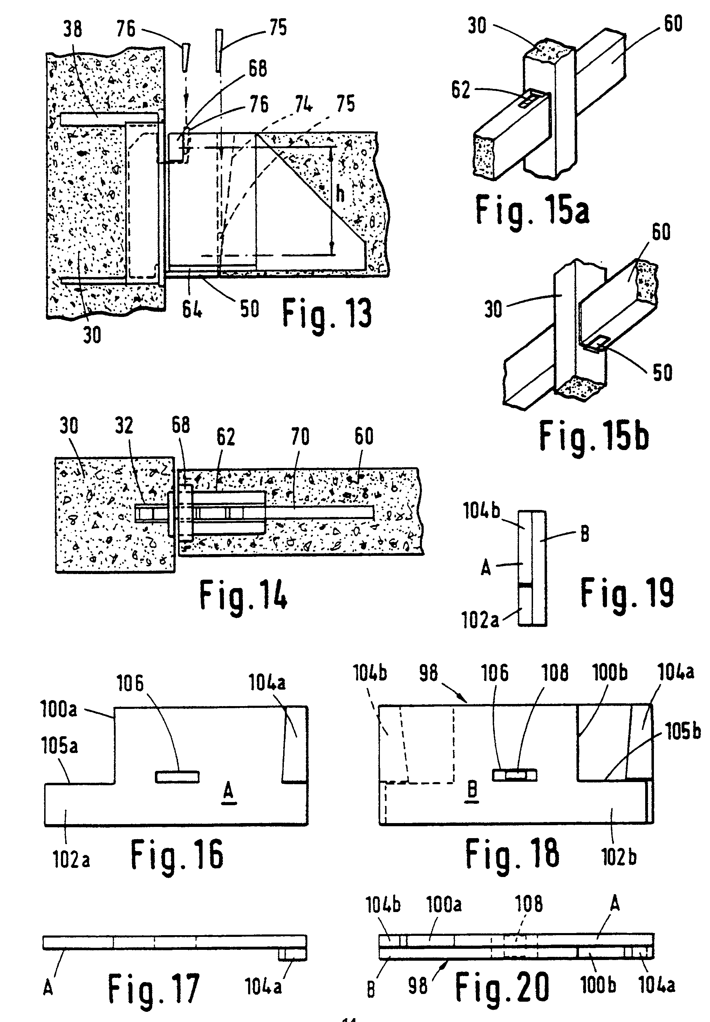

Figures 16 to 27 show a third embodiment of the invention which is for so called "bilateral" support of beams at the junctions, i.e. one beam is positioned to each side of the column utilising a single or a combined joint fixture. In this embodiment, the bridge elements are formed by two substantially identical plate elements.

Figures 16 and 17 shows one of two identical plate elements A and B which together form a composite bridge element 98. The element has in general an elongated, rectangular shape and is provided with an upper recess 100a in the one end which provides a lower extension 102a and is at the other end provided with a lateral member in the shape of a plate element 104a, the lower edge of which is at the same level as the top edge 105a of the extension 102a. In the center portion, both plates A and B have an open slit 106.

Figures 18, 19 and 20 are lateral, end and plan views, respectively, of the two plates A and B in combined or superposed relation position, such that the plate member 104a is received in the cut-out 100b on the extension. (Equal parts on the two plates A and B are designated with the same reference numbers but furnished with the letter "a" or "b", respectively). It will be understood that the two plates A and B thus rest on each other at the respective ends, such that part 104a on plate A rests on part 100b on plate B and vice versa.

In the center slits 106 through the two plates is positioned during the mounting a locking member 108, dimensioned to make possible a limited lengthwise mutual displacement between the two combined plates.

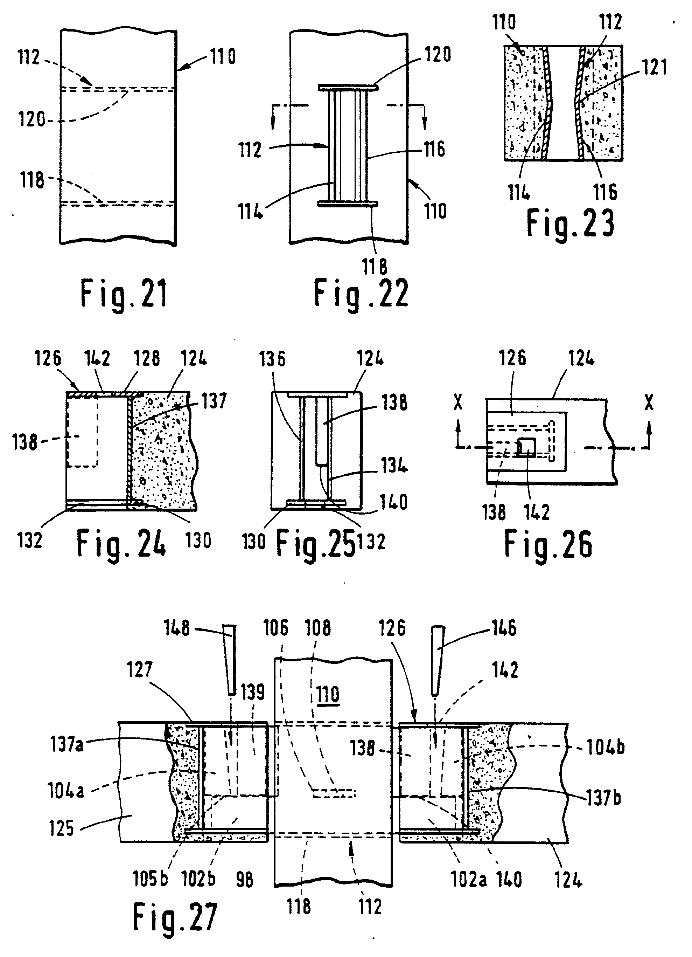

Figures 21, 22 and 23 show a lateral, a front and a cross-sectional view, respectively, of a part of a concrete column 110 provided with an embedded support box 112, preferably made of welded steel plate with two mutually spaced side walls 114, 116, and bottom and top walls 118, 120. The box has a height and width suitable for reception of the two combined plates as shown in Figures 18 to 20. The side walls are preferably somewhat bevelled outwards from the center portion 121 as indicated in Figure 23.

Figures 24, 25 and 26 show a lateral view (a section along plate X-X shown in Figure 26), end view and plan view, respectively, of the end portion of a beam 124 provided with an embedded support box 126 adapted for reception of the combined plates constituting the bridge element 98 utilised with this embodiment of the invention. The box is preferably made of welded steel plates consisting of a top wall 128, a bottom wall 130 provided with a central opening 132 (see Figure 25), side walls 134, 136, and a rear wall 137. On one of the side walls 134 is positioned a support element 138 dimensioned for positioning the cut-out 100a (100b, respectively), in the plate A (respectively B). The support element 138 is so dimensioned that it laterally fits in between the support plate designated 104a, and the opposing side edge designating 100b as shown in Figure 18. Further, the under edge 140 of the support element 138 rests on the top edge 105b in the recess 100b. Finally, the support box has an opening 142 in the top plate 138 to provide access from above for a locking member. Only the joint between the bridge element with the plates A and B on one side of the column is here described in detail since the joints between the two beams and the column are identical on either side of the column.

Once the column 110 has been erected and is ready for mounting of the beams, the composite bridge element 98 comprising the two plates A and B of Figures 18-20 is supported in the support box 112 in the column. Thereafter the beams can be hung or threaded onto the bridge element from above, since the support box 126 in the beam is as mentioned provided with an opening 132 in the bottom. Thus the under edge 140 on the support element 138 in the support box 126 in the beam will come to rest on the top edge 105a (respectively 105b) of the extension 102a (and 102b) on the plate A (respectively B). Simultaneously, the top edge of the plate B (respectively A) will come to rest against the under side of the top wall 128 in the support box.

Correspondingly, the lateral members 104a, b of each plate engage behind the support elements 139, 138 respectively of the beam support boxes to prevent withdrawal of each plate from the support box in which it is received, although still permitting some relative horizontal movement.

As illustrated in Figure 27, which shows a lateral view of a finished joint or junction, the beam 124 has via the support element 138 come to rest against the extension 105a on the plate member A, while the beam 125 via the support element designated 137 has come to rest against the top edge or extension 105b on the plate B. Vertical loads on the plates A and B constituting the bridge element 98 are thus transferred from the support element 138 to 105a, and from 127 in the other support box 205b, respectively, and is transferred to the bottom plate 118 in the support box 112 in the column. Vertical loads from the beams will thus be transferred to the columns via both plates A and B on both sides of the column. Only in the case when the vertical loads arising from the beam 124 and beam 125 are different, torsional forces will arise and will then normally be transferred to the column via the top plate 120 in the support box 112 in the column 110.

Vertical loads from the beams also can be transferred to the bridge element in that the top edge of the plates A and B rests against the under side of the top plates 128 in the support boxes in the beams.

In this position, wedge members 146, 148 are put down into the openings 142, 142 in the top plate 128, 128 in the support boxes in the beam ends. Each of these wedge members will engage against the inside edge of the support element 137, 138, respectively, in the support boxes in the beams, and against the inside edge of the plate elements 104a, 104b, respectively, on the plates A and B, and thereby press them towards the back wall 137a, 137b in the support boxes in the beams (See Figure 23).

By means of this construction, each beam 124, 125 will thereby be laterally and torsionally fixed to the plates A and B, respectively, and vertical loads, as previously mentioned, will be transferred via extensions 102a and 102b to the support box in the column. Both means can undergo limited horizontal movements mutually as well as relative to the column in that the support elements 138, 139, respectively, slide along the top edge of the extensions 102a, 102b, respectively, (simultaneously the plates A and B will slide mutually).

Vertical forces in the beam 124 are transferred to the plate A via the extension 102a and from this to the support box in the column, while possible vertical moments in the beam 124 will be transferred to the plate B via the extension 104b, the support element 138, the wedge member 146 effecting the wedging together of the before mentioned parts. Vertical forces in the other beam 125 will in the same fashion be transferred to the plate element B via the extension 102b and from the same to the support box in the column while possible vertical moments in the beam 125 will be transferred to the plate element A and from this to the column in the same fashion as described in respect of the beam 124. If the wedge members have a such length that they extend all way down to the extensions 102a and 102b, the connection can also be at least in part torsionally fixed in the opposite direction (i.e. upwards), inasmuch as the wedge member then also will be positioned below the horizontally extending center axis of the beam. The fact that the beams may undergo limited horizontal movements both mutually and relative to the column is important, because the joints can thus absorb socalled "constrained forces" which may arise due to the crimp in the concrete and temperature variations. Such constrained forces will primarily arise on the inside of a building frame construction and then result in lateral displacements and tension concentration in the junctions. By utilising the joint shown in Figures 16 and 27, such displacements and tensions in the junctions can be avoided. The embodiments of the invention as shown in Figures 1 to 15 may also be utilised inside the building, but will be most suitable along the outside of the building, i.e. at the end points of the floor construction, since said constrained forces will, along the outside of the building, be rather small.

Complementary parts of beams, bridge elements and support boxes, etc. are so dimensioned that small open spaces 140, 142 will be present on either side of the column in order to make possible dimensioned movements between beams and the column. Such open spaces may be filled with plaster or the like when the building structure is completely erected. Likewise the under sides of the support boxes in the beams may be covered and protected with plaster or other suitable material. When the floor decks or elements have been positioned onto the beams, no steel parts will thus be exposed, and it should also be noted that all load sustaining parts in the junction will be be positioned in the center parts of the concrete elements and are thereby well protected in case of fire.

A junction with the bilateral solution as illustrated in Figures 16 to 27 will have an appearance almost exactly identical with the appearance of the junction as shown in Figures 13 and 14.

In regard the embodiments of the invention shown in Figures 1 to 15 it will be understood that joints can be arranged on one, two, three, or on all four sides of the columns and be used for various applications in building structures. The embodiment shown in Figures 16 to 27 is particularly adaptable for building structures with bilateral beam configurations.

## Claims

1. A joint for interconnecting a concrete beam (or beams) and a column for a building structure each joint unit comprising:

a) a support casing or box (12,62,126,127) which is embedded in the end of the beam (10,60,124), said box (12,32) being open at and flush with the transverse end surface of the beam;

b) a complementary support casing or box (4,32,112) embedded in the column (2,30,110) for each beam, said box being open towards the side surface of the column and flush with the same;

c) a separate bridge element (18,46,98) positioned in a support box in the column and a support box in a beam, the said bridge element being displaceable longitudinally of the beam during assembly of the joint; and

d) a locking element (24,146) for fixing the bridge element against longitudinal movement relative to the beam to complete the joint, characterised in that the said bridge element (18,46,98) is constructed to make direct engagement with the casing (4,32,126,127) into which it is inserted during assembly of the joint to prevent its withdrawal from that casing by relative movement in the longitudinal direction of the beam (10,60,124) and that the casing in each beam is open from above to permit insertion (or subsequent removal) of a wedge (24,146) which constitutes the said locking element.

2. A joint in accordance with claim 1, characterised in that the bridge element (18,46) is formed as a plate-shaped element having much larger height than width and is adapted for upright positioning in the corresponding, complementary support boxes (12,32,126,127,4,32,112) in the respective beams and columns.

3. A joint in accordance with claim 1 or 2, characterised in that the bridge element (18) is longitudinally movable within its beam support box (12) prior to assembly of the joint, but is held captive within the support box by engagement of a part (28) of the bridge element with a locking shoulder of the support box.

4. A joint in accordance with claim 1, 2 or 3, characterised in that the bridge element (18) is provided on its underside with a recess (20) for engagement over an upwardly directed latch element(8) of the support box (4) in the column (2).

5. A joint according to claim 1 or 2, characterised in that the bridge element (46) is engageable in the column support box (32) so as to project in cantilever fashion therefrom, and the beam (60) and its support box (62) are engageable over the projecting part of the bridge element by vertical movement from above the element.

6. A joint according to claim 5, characterised in that the bridge element (46) has at one end an upwardly directed hook (72) for engagement in the column support box (32), and a lower support portion for engagement with a lower portion of the said column support box (32), whereby the bridge element is engageable in the column support box by inserting the hook (72), pivoting the element (46) about a transverse horizontal axis and lowering the element to engage the lower portion of the support box while the hook remains engaged with the column support box (32).

7. A joint in accordance with claim 6, characterised in that the support box (62) in the beam has a transverse member (68) adapted to be hooked into a recess (48) on the top side of the bridge element (46).

8. A joint in accordance with claim 7, characterised in that the bridge element (46) is provided at its lower region with a transverse support member (50) adapted to bear against a vertical front plate (34) in the support box (62).

9. A joint according to claim 1, for interconnecting two aligned concrete beams (124,125) with a column (110), characterised in that the bridge elements (98A,98B) are of plate-like construction which pass freely through the support box (112) in the column in horizontal sliding relation to each other, with abutment means (106,108) limiting the relative horizontal movement between the bridge elements (98A,98B), which engage in the support boxes (126,127) of the respective beams.

10. A joint in accordance with claim 9, characterised in that the support box (112) in the column (110) extends all the way through the column and is terminated flush with the column surface on each side of the column, said bridge element (98A,98B) having such lengths that when positioned in the support box (112) in the column, they both extend outside of the column surface to either side.

11. A joint in accordance with claim 9 or 10, characterised in each of the plate elements (A,B) constituting the bridge element (98) is provided at one end with lateral projection (104a,104b) and at the other end with a cut-out (100a,100b), the two plate members in mounting position being superposed with each other such that the projection (104a,104b) on one plate member is positioned in the cut-out (100b,100a respectively) in the other plate member and vice versa, and in that the support boxes (125,126) in the ends of the beams likewise are provided with lateral projections (138,139) on one side of the walls in the box adapted for engagement in the cut-out in and for abutment with the said lateral projection of the adjacent bridge element plate member, when the same is placed in mounted position, and in that a locking wedge (146,148) is positioned in a clearance space between the support element (138,139) in the support box (126,127) and the projection (100a,100b) on the adjacent plate member, to bias the end edges of the plate members against the rear walls (137,137a) in the support boxes and thereby lock the beams to said plates.

12. A joint in accordance with claim 10 or 11, characterised in that the support elements (138,139) in the support box (126,127) in each beam (124,125) in mounted position rests against the top edge (105) in the cut out (100) in the end portion of respective bridge element plate member in the support box, so that, downwardly directed forces from the beam are transferred to said plate and from said plate to the column (110).

13. A joint in accordance with any one of claims 9 to 12, characterised in that said plate members (A,B) constituting the bridge element are provided with complementary through-going openings (106) for positioning a through-going locking element (108), which is dimensioned relative to the openings to permit the said limited horizontal movement between the plates.

14. A joint according to any one of claims 9 to 13, characterised in that the vertical side walls (114,116) of the support box (112) in the column diverge outwardly away from the vertical centre line of the column, so that the bridge element (98) and thus also the beams in mounted position can undergo limited lateral movements relative to the said centre line.

15. A joint in accordance with any one of claims 9 to 14, characterised in that the support box in each beam (124,125) extends substantially from the under side to the top side of the beam and is terminated with a top plate (128) and a bottom plate (130), respectively, and in that the bottom plate (130) is partly open (132) such that the support box has a bottom opening in order that said beam can be threaded vertically onto the bridge element (98) from above.

16. A joint in accordance with claim 15, characterised in that the top edge of the plate elements (A,B) constituting the bridge element is dimensioned to contact the under side of the top plates (128) of the support box in the beam, so that the top edges of the plates (A,B) receive a part of the vertically directed forces arising from the weight of the beams and the floor decks.

**Patentansprüche**

1. Verbindung zum Verbinden eines oder mehrerer Betonträger mit einem Pfeiler für eine Gebäudekonstruktion, gekennzeichnet durch:

    a) ein Lagergehäuse oder einen Lagerkasten (12,62,126,127), welcher eingebettet ist in das Ende des Trägers (10,60,124), wobei der Kasten an der Qerendfläche des Trägers offen und mit dieser bündig ist,

    b) ein komplementäres Lagergehäuse oder Lagerkasten (4,32,12), der in den Pfeiler (2,30,110) für jeden Träger eingebettet ist, wobei der Kasten zu der Seitenfläche des Pfeilers hin offen und mit dieser bündig ist,

    c) ein getrenntes Brückenelement (18,46,98), das in einem Lagerkasten in dem Pfeiler und einem Lagerkasten in einem Träger positioniert ist, wobei das Brückenelement während der Montage der Verbindung in Längsrichtung des Trägers verschiebbar ist, und

    d) ein Verriegelungselement (24,146) zum Fixieren des Brückenelementes gegen eine Längsbewegung relativ zu dem Träger, um die Verbindung zu vervollständigen,

dadurch gekennzeichnet, daß das Brückenelement (18,46,98) so konstruiert ist, daß es während der Montage der Verbindung einen direkten Eingriff in das Gehäuse (4,32,126,127) macht, in welches es eingesetzt wird, um sein Zurückziehen aus diesem Gehäuse durch eine Relativbewegung in der Längsrichtung des Trägers (10,60,124) zu verhindern, und daß das Gehäuse in jedem Träger von oben offen ist, um das Einsetzen (oder anschließende Entfernen) eines Keiles (24,146) zu gestatten, welcher das Verriegelungselement bildet.

2. Verbindung nach Anspruch 1, dadurch gekennzeichnet, daß das Brückenelement (18,46) als plattenförmiges Element ausgebildet ist, das eine viel größere Höhe als Breite aufweist und vorgesehen ist zum aufrechten Positionieren in den entsprechenden komplementären Lagerkästen (12,32,126,127,4,32,112) in den jeweiligen Trägern und Pfeilern.

3. Verbindung nach Anspruch 1 oder 2, dadurch gekennzeichnet, daß das Brückenelement (18) vor der Montage in Längsrichtung verschiebbar ist innerhalb seines Trägerlagerkastens (12), aber in dem Lagerkasten gefangengehalten wird durch Eingriff eines Teiles (28) des Brückenelementes in eine Verriegelungsschulter des Lagerkastens.

4. Verbindung nach Anspruch 1, 2 oder 3, dadurch gekennzeichnet, daß das Brückenelement (18) an seiner Unterseite mit einer Aussparung (20) zum Eingreifen über ein nach oben gerichtetes Riegelement (8) des Lagerkastens (4) in dem Pfeiler (2) versehen ist.

5. Verbindung nach Anspruch 1 oder 2, dadurch gekennzeichnet, daß das Brückenelement (46) in dem Pfeiler-Lagerkasten (32) derart in Eingriff zu bringen ist, daß es freitragend von diesem vorsteht, und der Träger (60) und sein Lagerkasten (62) über den vorragenden Teil des Brückenelementes in Eingriff zu bringen sind durch vertikale Bewegung von oberhalb des Elementes.

6. Verbindung nach Anspruch 5, dadurch gekennzeichnet, daß das Brückenelement (46) an einem Ende einen nach oben gerichteten Haken (72) zum Eingriff in den Pfeiler-Lagerkasten (32) und einen unteren Lagerbschnitt zum Kontakt mit einem unteren Abschnitt des Pfeiler-Lagerkastens (32) aufweist, wodurch das Brückenelement in dem Pfeiler-Lagerkasten in Eingriff zu bringen ist durch Einsetzen des Hakens (72), Schwenken des Elementes (46) um eine horizontale Querachse und Absenken des Elementes zum Kontaktieren des unteren Abschnitts des Lagerkastens, während der Haken mit dem Pfeiler-Lagerkasten (32) in Eingriff bleibt.

7. Verbindung nach Anspruch 6, dadurch gekennzeichnet, daß der Lagerkasten (62) in dem Träger ein Querteil (68) aufweist, welches vorgesehen ist zum Einhaken in eine Aussparung (48) an der Oberseite des Brückenelementes (46).

8. Verbindung nach Anspruch 7, dadurch gekennzeichnet, daß das Brückenelement (46) bei seinem unteren Bereich mit einem Querstützteil (50) versehen ist, das vorgesehen ist zum Anlegen an einer vertikalen Frontplatte (34) in dem Lagerkasten (62).

9. Verbindung nach Anspruch 1 zum Verbinden zweier ausgerichteter Betonträger (124,125) mit einem Pfeiler (110), dadurch gekennzeichnet, daß die Brückenelemente (98A,98B) einen plattenförmigen Aufbau aufweisen, welche frei durch den Lagerkasten (112) in dem Pfeiler zu horizontaler Gleitbeziehung zueinander hindurchgehen, mit einer Anschlageinrichtung (106,108), welche die relative Horizontalbewegung zwischen den Brückenelementen (98A,98B) beschränkt, welche in den Lagerkästen (126,127) der jeweiligen Träger in Eingriff kommen.

10. Verbindung nach Anspruch 9, dadurch gekennzeichnet, daß der Lagerkasten (112) in dem Pfeiler (110) sich über die ganze Strecke durch den Pfeiler erstreckt und auf jeder Seite des Pfeilers bündig mit der Pfeilerfläche endet, wobei die Brückenelemente (98A,98B) solche Längen aufweisen, daß sie, wenn sie in dem Lagerkasten (112) in dem Pfeiler positioniert werden, sich beide nach einer Seite aus der Pfeilerfläche heraus erstrecken.

11. Verbindung nach Anspruch 9 oder 10, dadurch gekennzeichnet, daß jedes der das Brückenelement (98) bildenden Plattenelemente (A,B) an einem Ende mit einem seitlichen Ansatz (104a,104b) und an dem anderen Ende mit einem Ausschnitt (100a,100b) versehen ist, wobei die zwei Plattenteile in der Montageposition miteinander überlagert sind derart, daß der Ansatz (104a,104b) an einem Plattenteil in den Ausschnitt (100b bzw.100a) in dem anderen Plattenteil und umgekehrt positioniert wird, und daß die Lagerkästen (125,126) in den Enden der Träger ebenso versehen sind mit seitlichen Ansätzen (138,139) auf einer Seite der Wände in dem Kasten, die vorgesehen sind zum Eingriff in den Ausschnitt in und dem Anschlag an dem seitlichen Ansatz des benachbarten Brückenelement-Plattenteiles, wenn dieses in Montageposition plaziert wird, und daß ein Verriegelungskeil (146,148) in einem Spielraum zwischen dem Lagerelement (138,139) in dem Lagerkasten (126,127) und dem Ansatz (100a,100b) an dem benachbarten Plattenteil positioniert wird, um die Endkanten der Plattenteile gegen die Rückwände (137,137a) in den Lagerkästen vorzuspannen und dadurch die Träger mit den Platten zu verriegeln.

12. Verbindung nach Anspruch 10 oder 11, dadurch gekennzeichnet, daß die Lagerelemente (138,139) in dem Lagerkasten (126,127) in jedem Träger (124,125) in montierter Position an der Oberkante (105) in dem Ausschnitt (100) in dem Endabschnitt des jeweiligen Brückenelement-Plattengliedes in dem Lagerkasten anliegen, so daß nach unten gerichtete Kräfte von dem Träger auf die Platte und von der Platte auf den Pfeiler (110) übetragen werden.

13. Verbindung nach einem der Ansprüche 9 bis 12, dadurch gekennzeichnet, daß die das Brückenelement bildenden Plattenglieder (A,B) mit komplementären durchgehenden Öffnungen (106) verbunden sind zum Positionieren eines durchgehenden Verriegelungselementes (108), welches relativ zu den Öffnungen so bemessen ist, daß es die beschränkte Horizontalbewegung zwischen den Platten zuläßt.

14. Verbindung nach einem der Ansprüche 9 bis 13, dadurch gekennzeichnet, daß die vertikalen Seitenwände (114,116) des Lagerkastens (112) in dem Pfeiler von der vertikalen Mittellinie des Pfeilers nach außen weg divergieren, so daß das Brückenelement (98) und damit auch die Träger in montierter Position beschränkte seitliche Bewegungen relativ zu der Mittellinie erfahren können.

15. Verbindung nach einem der Ansprüche 9 bis 14, dadurch gekennzeichnet, daß der Lagerkasten in jedem Träger (124,125) sich im wesentlichen von der Unterseite zu der Oberseite des Trägers erstreckt und mit einer Deckplatte (128) bzw. einer Bodenplatte (130) endet, und daß die Bodenplatte (130) teilweise offen (132) ist, so daß der Lagerkasten eine Bodenöffnung aufweist, damit der Träger vertikal von oben auf das Brückenelement (98) gesteckt werden kann.

16. Verbindung nach Anspruch 15, dadurch gekennzeichnet, daß die Oberkante des das Brückenelement bildenden Plattenenelementes (A,B) so bemessen ist, daß es die Unterseite der Deckplatte (128) des Lagerkastens in dem Träger kontaktiert, so daß die Oberkanten der Platten (A,B) einen Teil der vertikal gerichteten Kräfte erhalten, die von dem Gewicht der Träger und der Geschoßdecken herrühren.

## Revendications

1. Raccord destiné au raccordement d'une poutre (ou de plusieurs poutres) de béton et d'une colonne dans une structure de bâtiment, chaque ensemble de raccord comprenant :

a) un carter ou caisson de support (12, 62, 126, 127) qui est enrobé à l'extrémité de la poutre (10, 60, 124), le caisson (12, 32) étant ouvert à la surface transversale d'extrémité de la poutre et se terminant au niveau de cette surface,

b) un carter ou caisson complémentaire de support (4, 32, 112) enrobé dans la colonne (2, 30, 110) pour chaque poutre, le caisson étant ouvert vers la face latérale de la colonne et au niveau de celle-ci,

c) un élément séparé de liaison (18, 46, 98) placé dans un caisson de support disposé dans la colonne et un caisson de support disposé dans une poutre, l'élément de liaison étant mobile suivant la longueur de la poutre lors de l'assemblage du raccord, et

d) un élément de blocage (24, 146) destiné à fixer l'élément de liaison afin qu'il ne puisse pas se déplacer longitudinalement par rapport à la poutre de manière que le raccord soit terminé, caractérisé en ce que l'élément de liaison (18, 46, 98) a une construction dans laquelle il est destiné à être directement au contact du carter (4, 32, 126, 127) dans lequel il est introduit lors de l'assemblage du raccord de manière qu'il ne puisse pas être retiré de ce carter par déplacement relatif dans la direction longitudinale de la poutre (10, 60, 124), et en ce que le carter de chaque poutre est ouvert par-dessus afin qu'il permette l'introduction (ou l'extraction ultérieure) d'un coin (24, 146) qui constitue l'élément de blocage.

2. Raccord selon la revendication 1, caractérisé en ce que l'élément de liaison (18, 46) est formé d'un élément analogue à une plaque ayant une hauteur bien supérieure à sa largeur et est destiné à être positionné verticalement dans les caissons complémentaires correspondants de support (12, 32, 126, 127, 4, 32, 112) des poutres et colonnes respectives.

3. Raccord selon la revendication 1 ou 2, caractérisé en ce que l'élément de liaison (18) est mobile longitudinalement dans son caisson (12) de support de poutre avant l'assemblage du raccord, mais il est maintenu captif dans le caisson de support par coopération d'une partie (28) de l'élément de liaison avec un épaulement de blocage du caisson de support.

4. Raccord selon la revendication 1, 2 ou 3, caractérisé en ce que l'élément de liaison (18) a, à sa face inférieure, une cavité (20) destinée à coopérer avec un élément (8) de verrouillage dirigé vers le haut, appartenant au caisson de support (4) placé dans la colonne (2).

5. Raccord selon la revendication 1 ou 2, caractérisé en ce que l'élément de liaison (46) est destiné à être en contact à l'intérieur du caisson (32) de support de la colonne de manière qu'il dépasse en porte-à-faux de celle-ci, et la poutre (60) et son caisson de support (62) sont destinés à coopérer sur la partie en saillie de l'élément de liaison, par déplacement vertical depuis la partie supérieure à l'élément.

6. Raccord selon la revendication 5, caractérisé en ce que l'élément de liaison (46) comporte, à une première extrémité, un crochet (72) dirigé vers le haut et destiné à coopérer avec l'intérieur du caisson (32) de support de colonne, et une partie inférieure de support destinée à coopérer avec une partie inférieure du caisson (32) de support de colonne, si bien que l'élément de liaison peut coopérer dans le caisson de support de colonne par introduction du crochet (72), pivotement de l'élément (46) autour d'un axe horizontal transversal et abaissement de l'élément afin qu'il vienne au contact de la partie inférieure du caisson de support alors que le crochet reste en coopération avec le caisson (32) de support de colonne.

7. Raccord selon la revendication 6, caractérisé en ce que le caisson (62) de support placé dans la poutre a un organe transversal (68) destiné à être accroché dans une cavité (48) formée à la face supérieure de l'élément de liaison (46).

8. Raccord selon la revendication 7, caractérisé en ce que l'élément de liaison (46) est muni, dans sa région inférieure, d'un organe transversal (50) de support destiné à être en appui contre une plaque verticale avant (34) placée dans le caisson de support (62).

9. Raccord selon la revendication 1, destiné à interconnecter deux poutres alignées (124, 125) de béton à une colonne (110), caractérisé en ce que les éléments de liaison (98A, 98B) ont une construction analogue à une plaque passant librement dans le caisson de support (112) placé dans la colonne, et pouvant coulisser horizontalement l'un par rapport à l'autre, un dispositif de butée (106, 108) limitant le déplacement horizontal relatif des éléments de liaison (98A, 98B) qui sont au contact des caissons de support (126, 127) des poutres respectives.

10. Raccord selon la revendication 9, caractérisé en ce que le caisson de support (112) placé dans la colonne (110) est disposé dans toute la colonne et se termine au niveau de la surface de la colonne sur chaque face de celle-ci, les éléments de liaison (98A, 98B) ayant des longueurs telles que, lorsqu'ils sont placés dans le caisson de support (112) dans la colonne, ils dépassent tous deux de la surface de la colonne, des deux côtés.

11. Raccord selon la revendication 9 ou 10, caractérisé en ce que chacun des éléments (A, B) en forme de plaques constituant l'élément de liaison (98) possède, à une extrémité, une saillie latérale (104a, 104b) et, à l'autre extrémité, une découpe (100a, 100b), les deux organes en forme de plaques, en position de montage, étant superposés mutuellement de manière que la saillie (104a, 104b) d'un organe en forme de plaque se loge dans la découpe (100b, 100a respectivement) de l'autre organe en forme de plaque et inversement, et en ce que les caissons de support (125, 126) placés aux extrémités des poutres comportent de même des saillies latérales (138, 139) placées d'un côté des parois, dans le caisson, ces saillies étant destinées à coopérer avec la découpe formée dans l'organe en forme de plaque de l'élément adjacent de liaison et à être en butée contre la saillie latérale de cet organe adjacent, lorsqu'ils sont placés en position de montage, et en ce qu'un coin de blocage (146, 148) est placé dans l'espace compris entre l'élément de support (138, 139) formé dans le caisson de support (126, 127) et la saillie (100a, 100b) placée sur l'organe en forme de plaque de manière que les bords d'extrémité des organes en forme de plaques soient repoussés contre les parois arrière (137, 137a) des caissons de support et bloquent ainsi les poutres sur les plaques.

12. Raccord selon la revendication 10 ou 11, caractérisé en ce que les éléments de support (138, 139) placés dans le caisson de support (126, 127) dans chaque poutre (124, 125) en position montée sont en appui contre le bord supérieur (105) formé dans la découpe (100) dans la partie d'extrémité de l'organe respectif en forme de plaque d'élément de liaison placé dans le caisson de support si bien que les forces appliquées vers le bas par la poutre sont transférées à la plaque et de la plaque à la colonne (110).

13. Raccord selon l'une quelconque des revendications 9 à 12, caractérisé en ce que les organes en forme de plaques (A, B) constituant l'élément de liaison ont des ouvertures débouchantes complémentaires (106) destinées au positionnement d'un élément traversant de blocage (108) ayant, par rapport aux ouvertures, des dimensions permettant un déplacement horizontal limité entre les plaques.

14. Raccord selon l'une quelconque des revendications 9 à 13, caractérisé en ce que les parois latérales verticales (114, 116) du caisson de support (112) placé dans la colonne divergent vers l'extérieur en s'écartant de l'axe vertical central de la colonne si bien que l'élément de liaison (98) et ainsi les poutres, en position montée, peuvent présenter des déplacements latéraux limités par rapport à l'axe central.

15. Raccord selon l'une quelconque des revendications 9 à 14, caractérisé en ce que le caisson de support placé dans chaque poutre (124, 125) est pratiquement disposé depuis la face inférieure jusqu'à la face supérieure de la poutre et se termine par une plaque supérieure (128) et une plaque inférieure (130) respectivement, et en ce que la plaque inférieure (130) est ouverte partiellement (132) de manière que le caisson de support possède une ouverture inférieure telle que la poutre peut être enfoncée verticalement par-dessus sur l'élément de liaison (98).

16. Raccord selon la revendication 15, caractérisé en ce que le bord supérieur des éléments en forme de plaques (A, B) constituant l'élément de liaison ont des dimensions telles qu'ils sont au contact de la face inférieure des plaques supérieures (128) du caisson de support dans la poutre, si bien que les bords supérieurs des plaques (A, B) reçoivent une partie des forces dirigées verticalement et dues au poids des poutres et des structures plates formant des sols.

Fig. 1

Fig. 2

Fig. 3

Fig. 5

Fig. 4

12

Fig. 6

Fig. 11

Fig. 7

Fig. 8

Fig. 12

Fig. 9

Fig. 10

Fig. 13

Fig. 15a

Fig. 15b

Fig. 14

Fig. 19

Fig. 16

Fig. 17

Fig. 18

Fig. 20

Fig.21

Fig.22

Fig.23

Fig.24

Fig.25

Fig.26

Fig.27